# EUROPEAN PATENT SPECIFICATION

(11) **EP 1 071 601 B1**
(45) Date of publication and mention of the grant of the patent: **22.10.2003**
(21) Application number: 99915956.9
(22) Date of filing: 16.04.1999
(51) Int. Cl.: B62D 25/08

(54) **VEHICLE MODULE**
FAHRZEUGMODUL
MODULE DE VEHICULE

(30) Priority: 21.04.1998 GB 9808442; 23.04.1998 GB 9808682
(43) Date of publication of application: 31.01.2001
(73) Proprietor: Kautex Textron CVS Limited, London WC1R 4EB (GB)
(72) Inventor: STEPHEN, John Burt, Kidmore End, Reading RG4 9EB (GB)
(74) Representative: Slingsby, Philip Roy
(86) International application number: GB9901166
(87) International publication number: WO99054187

(56) References cited:
- EP-A- 0 437 781
- EP-A- 0 652 150
- EP-A- 0 679 565
- WO-A-82/00808
- DE-A- 4 307 793
- DE-A- 19 520 870
- US-A- 5 409 288
- DATABASE WPI Section PQ, Week 9850 Derwent Publications Ltd., London, GB; Class Q17, AN 98-589203 XP002900565 -& JP 10 264858 A (AISIN SEIKI KK), 6 October 1998 (1998-10-06)
- DATABASE WPI Section PQ, Week 9605 Derwent Publications Ltd., London, GB; Class Q13, AN 96-043109 XP002900566 -& JP 07 285460 A (NISSAN MOTOR CO LTD), 31 October 1995 (1995-10-31)

## Description

The present invention relates generally to volume production or vehicles, and more specifically to a structure and an assembly useful in such production.

Vehicle components such as headlamps, radiators, fan and shroud units are usually separately mounted on a vehicle during its manufacture. Some of the components may require alignment for correct operation, and access to the components may be restricted and difficult. This is both expensive and time consuming.

WO82/00808 discloses a front part for a motor vehicle in which additional apparatus of the vehicle can be incorporated in order to help provide a space-saving arrangment.

However there remains a problem of trying to reduce space further in the engine compartment.

It is therefore an object of the present invention to at least partly mitigate these problems.

According to a first aspect of the present invention there is provided a moulded plastics structure for use in volume production of a vehicle, said structure comprising an inner wall defining an opening, the inner wall having means for securing said structure to a heat exchanger assembly, said structure having opposing lateral extremities forming respective mountings for headlamps of said vehicle characterized in that the heat exchanger assembly comprises a fan shroud device secured to a vehicle radiator, said fan shroud device providing mountings for a cooling fan; and wherein the fan shroud device comprises liquid reservoirs.

Preferably the structure further comprises mountings for cleaning apparatus for cleaning said headlamps.

Conveniently the mountings for cleaning apparatus comprise mountings for a headlamp washer.

According to a second aspect of the present invention there is provided a method for forming a moulded plastics structure in accordance with the first aspect of the invention, comprising providing a mould corresponding to said structure and using a moulding process to form said structure.

Preferably the moulding process comprises blow moulding.

Alternatively, preferably the moulding process comprises injection moulding.

Advantageously the injection moulding process comprises thermoforming.

Alternatively, preferably the moulding process comprises rotational moulding.

According to a third aspect of the present invention there is provided an assembly for use in volume production of a vehicle, said assembly comprising a radiator, an air guide device and a headlamp mounting member, said air guide device being supported on said radiator and having a fan support for securing thereto a cooling fan, said headlamp mounting member having an internal wall defining an opening, and extending therefrom laterally to form respective opposed mountings for vehicle headlamps, said air guide device being disposed in said opening and secured to headlamp mounting member characterized in that said air guide device is formed by the fan shroud which has a body portion engaging said radiator, said body portion comprising a reservoir for cleaning fluid.

Preferably the headlamp mounting member further has mountings for cleaning apparatus and headlamps.

Advantageously said headlamp mounting member is made of molded plastics material.

Preferably the headlamp mounting member include securing portions for securing the assembly to a vehicle.

An embodiment of the present invention will now be described hereinafter by way of example only with reference to the accompanying drawings in which:
Figure 1 shows a moulded plastics structure for use in volume production of a vehicle in accordance with one aspect of the present invention.
Figure 2 shows an exploded partial front perspective view of a vehicle and vehicle parts to form an assembly in accordance with another aspect of the present invention.
Figure 3 shows an exploded front perspective view of a vehicle and an assembly in accordance with the present invention.

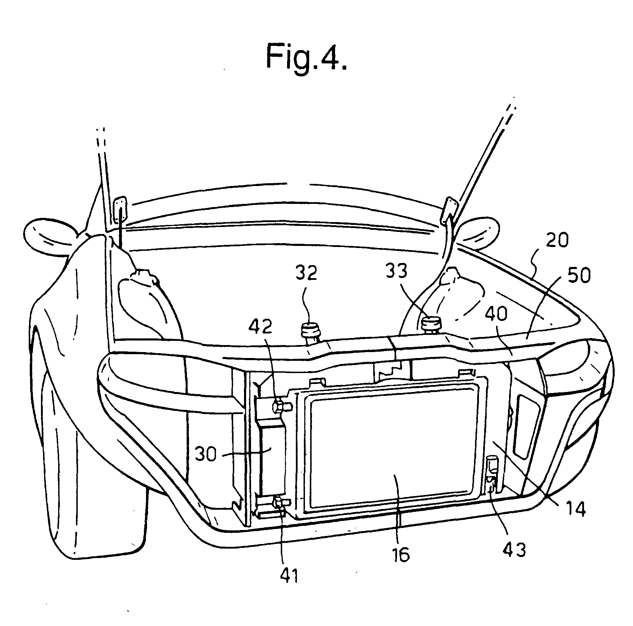

Figure 4 shows a front perspective view of a vehicle to which a vehicle assembly of Figure 2 has been secured.

In the drawings like reference numerals refer to like parts.

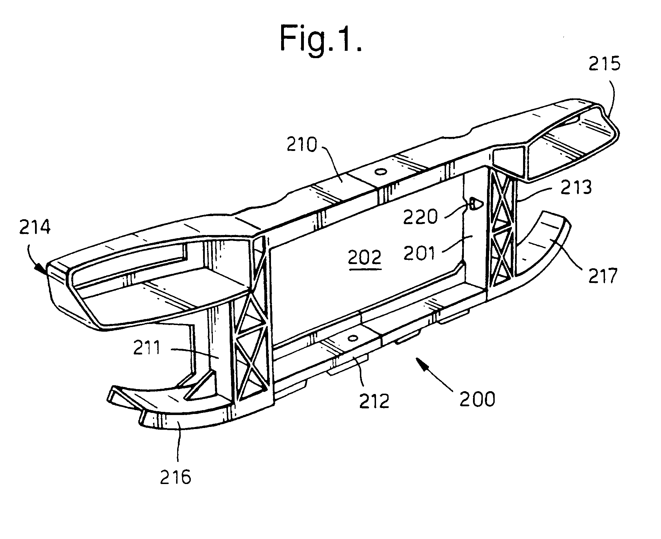

Referring to Figure 1, a moulded plastics structure 200 for use in volume production of a vehicle consists of four generally straight members 10-13 forming the perimeter of a rectangle such that the inner wall 201 of the four members defines a rectangular opening 202. One pair 210, 212 of mutually opposed members is longer than the respective pair 211, 213. In use, the longer pair 210, 212 are disposed substantially horizontally and the shorter 211, 213 are disposed substantially vertically. The opening 202 is dimensioned to receive a vehicle radiator assembly and the inner walls 201 of the two vertical members 211, 213 have sockets 220 for engagement with the radiator assembly.

Socket-defining members 214, 215 extend laterally outwardly from the top of the two shorter members 211, 213, the socket members forming mountings for headlamps and mountings for cleaning apparatus for cleaning the headlamps. At the lower extremity of the shorter members 211, 213 there extend laterally outwardly upwardly curved members 216, 217.

To form the moulded plastics structure, a suitable mould is provided and a moulding technique is used. Preferred techniques include blow moulding, injection moulding (including thermoforming) and rotational moulding. Other suitable techniques include vacuum forming and compression moulding although any technique or combination of techniques is envisaged.

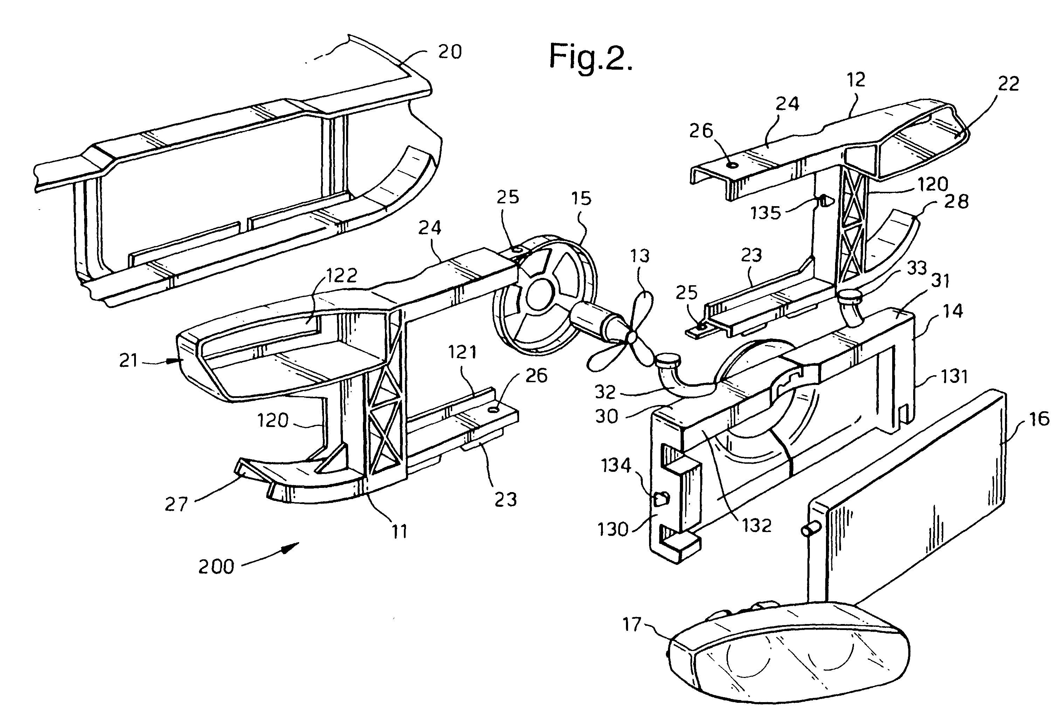

Referring to Figure 2, the moulded plastics structure consists of two substantially mirror-symmetrical parts 11, 12. Each of the parts 11, 12 has a respective one of the shorter members 211, 213 described with respect to Figure 1 and thus consists of a first rearwardly open-sided box member 120 which extends vertically as seen in the figure. The left hand part 11 has an upper open-sided box member 24 extending laterally and to the right from the top of its box member 120. The upper box member 24 is downwardly open. At the bottom of the box member 120 there is a lower support strip 23 having an upwardly extending flange 121 which extends parallel to the second box member. Also at the top of the first box member 120, but extending laterally in the opposite direction to the upper box member 24, a strip 21 extends to define a socket 122 which forms a mounting for a vehicle headlamp and a mounting for a headlamp washer nozzle. Extending from the bottom of the box member 120 there is an arm 27 which curves upwardly and outwardly.

As previously mentioned, the two parts 11 and 12 are substantially mirror-symmetrical with the exception of a tongue 25 protruding from the end of the upper box member 24, which co-operates with a hole 26 in the upper box member 24 of the second part 12 and a corresponding tongue 25 on the lower support strip 23 of the second part 12 which co-operates with a hole 26 in the corresponding strip of the first part 11.

When the parts 11, 12 are secured together by the tongues 25 and holes 26 the upper box members 24 and the lower support strip 23 form the opposed longer members 210, 212 described with respect to Figure 1. The inner wall 201 of the structure then defines the opening 202. The opening engages the outside periphery of a fan shroud structure, which may be of the type disclosed in US Patent No. 5649587 (McCord Winn Textron Inc). The shroud has a generally rectangular periphery defined by two generally vertical opposing side members 130, 131, whose length corresponds substantially to the length of the box members 120 of the two parts 11, 12 and a top member 132 whose length corresponds substantially to the spacing between the two first box members 120 when the two parts 11, 12 are assembled together. The top member 132 is such as to engage within the upper open box member 24 of the two parts 11, 12 and the shroud structure further has securing protrusions 134 extending outwardly from the side members 130, 131 to engage in sockets 135 of the first box members 120. At the front of the shroud structure 14, the side members and the top define an opening for engaging with the outer periphery of a vehicle radiator 16. At the rear of the shroud structure 14, the shroud structure forms an air guide device leading to a circular opening within which there is mounted a fan 13. The fan 13 is supported in the opening by a shroud cap 15 having plural support arms depending from a circumferential member.

Where the shroud structure 14 is of the type disclosed in US Patent No. 5649587, the side members and the top member define respective fluid reservoirs for storing fluid to be used for vehicle headlamp and windscreen washers. Such reservoirs are filled through respective filler caps 32, 33. The presence of the radiator in close proximity to the fluid reservoirs ensures that under normal operating conditions, the fluid contained in the reservoirs will not freeze.

The parts shown in Figure 2 are assembled as follows:-

The radiator 16 is disposed within the opening defined by the side members 130, 131 and the top member 132 and the fan is mounted within its opening. The resulting sub-assembly is then disposed within the opening defined by the two parts 11, 12, with the top of the shroud structure 14 contained within the upper open-box structure 24 and the mounting protrusions 134 within the sockets 135. The two parts 11, 12 are urged towards one another and secured in place.

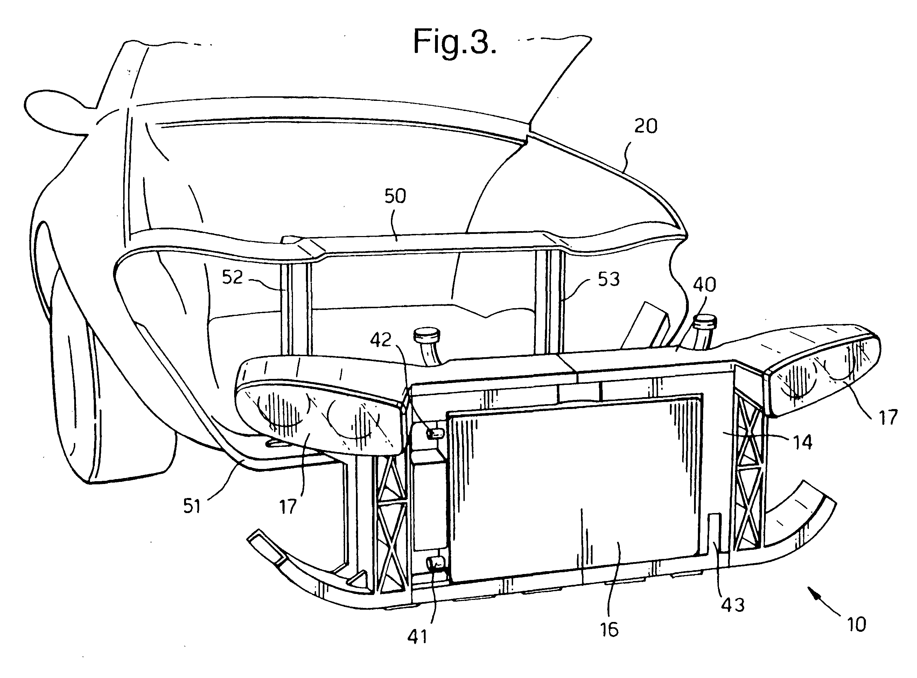

Once the assembly has been assembled together, a headlamp 17 is mounted in each of the sockets 122. The complete assembly is shown in Figure 3.

Referring now to Figure 3, the front portion of the vehicle 20 has a laterally-extended upper strip 50 which extends from one side of the front of the vehicle to the other. This member has a form which corresponds to the upper edge of the assembly. The vehicle also has two spaced vertically extending box members 52, 53 which correspond to the rearwardly-open box structures 120 of the two parts 11, 12. In use, the box structures 120 engage on the vertically-extending members 52, 53. The lower part of the vehicle front is defined by a generally horizontal and laterally-extending member 51 whose ends curve upwardly in conformity with the curve of the arms 27, 28 so that the lower support members 23 and the arms rest on the member 51.

Thus it will be understood by those skilled in the art that the laterally-extending members 50, 51 define a "socket" within which the assembly 10 can be received and supported; the vertically-extending members 52, 53 enable the assembly to be secured to the vehicle.

In this way the invention provides an assembly of vehicle parts which may be assembled prior to mounting to a vehicle and then mounted to the front of a vehicle relatively simply and inexpensively. Significantly, the alignment of the components can also be performed off the vehicle, and before mounting the assembly to the vehicle.

Although the present invention has been shown in respect of a car assembly it is envisaged that the invention could be adapted for use during the manufacture of any vehicle.

Likewise it is envisaged that various other vehicle components, for example indicator light clusters, could be included in the vehicle assembly.

## Claims

1. A moulded plastics structure (200) for use in volume production of a vehicle, said structure comprising an inner wall (201) defining an opening (202), the inner wall having means for securing said structure to a heat exchanger assembly, said structure having opposing lateral extremities forming respective mountings (214,215) for headlamps of said vehicle **characterized in that** the heat exchanger assembly comprises a fan shroud device secured to a vehicle radiator (16), said fan shroud device providing mountings for a cooling fan (13); and wherein the fan shroud device comprises liquid reservoirs.

2. A moulded plastics structure according to claim 1 wherein the structure further comprises mountings for cleaning apparatus for cleaning said headlamps.

3. A moulded plastics structure according to claim 2 wherein the mountings for cleaning apparatus comprise mountings for a headlamp washer.

4. A method for forming a moulded plastics structure (200) according to claim 1 said method comprising providing a mould corresponding to said structure and using a moulding process to form said structure.

5. A method according to claim 4 wherein the moulding process comprises blow moulding.

6. A method according to claim 4 wherein the moulding process comprises injection moulding.

7. A method according to claim 4 wherein the injection moulding process comprising thermoforming.

8. A method according to claim 4 wherein the moulding process comprises rotational moulding.

9. An assembly for use in volume production of a vehicle, said assembly comprising a radiator (16), an air guide device and a headlamp mounting member, said air guide device being supported on said radiator and having a fan support for securing thereto a cooling fan (13), said headlamp mounting member having an internal wall (201) defining an opening (202), and extending therefrom laterally to form respective opposed mountings (214,215) for vehicle headlamps, said air guide device being disposed in said opening (202) and secured to headlamp mounting member **characterized in that** said air guide device is formed by the fan shroud which has a body portion engaging said radiator, said body portion comprising a reservoir for cleaning fluid.

10. An assembly according to claim 9 wherein the headlamp mounting member further has mountings for cleaning apparatus and headlamps.

11. An assembly according to claim 9 to 10 wherein said headlamp mounting member is made of molded plastics material.

12. An assembly according to any one of claims 9 to 11 wherein the headlamp mounting member includes securing portions for securing the assembly to a vehicle.

## Patentansprüche

1. Geformte Kunststoffanordnung (200) zur Verwendung in der Massenproduktion eines Fahrzeugs, wobei die Anordnung eine innere Wand (201) umfaßt, die eine Öffnung (202) festlegt, wobei die innere Wand ein Mittel zum Befestigen der Anordnung mit einer Wärmetauscherbaugruppe aufweist, wobei die Anordnung gegenüberliegende seitliche Teile aufweist, die jeweils eine Halterung (214,215) für die Scheinwerfer des Fahrzeugs bilden, **dadurch gekennzeichnet, daß** die Wärmetauscherbaugruppe eine Lüftergestellvorrichtung umfaßt, die mit einem Fahrzeugkühler (16) verbunden ist, wobei die Lüftergestellvorrichtung Halterungen für einen Kühlungsventilator (13) aufweist; und wobei die Lüftergestellvorrichtung Flüssigkeitsbehälter aufweist.

2. Geformte Kunststoffanordnung nach Anspruch 1, bei der die Anordnung des weiteren Halterungen für Reinigungsvorrichtungen zum Reinigen der Scheinwerfer umfaßt.

3. Geformte Kunststoffanordnung nach Anspruch 2, bei der die Halterungen für die Reinigungsvorrichtungen Halterungen für eine Scheinwerferwaschvorrichtung umfassen.

4. Verfahren zur Formung einer geformten Kunststoffanordnung (200) nach Anspruch 1, wobei das Verfahren die Bereitstellung einer dieser Anordnung entsprechenden Form und die Verwendung eines Formvorgangs zur Formung der Anordnung umfaßt.

5. Verfahren nach Anspruch 4, bei dem der Formvorgang Blasformen umfaßt.

6. Verfahren nach Anspruch 4, bei dem der Formvorgang Spritzformen umfaßt.

7. Verfahren nach Anspruch 4, bei dem der Spritzformvorgang Thermoformen umfaßt.

8. Verfahren nach Anspruch 4, bei dem der Formvorgang Roationsformen umfaßt.

9. Baugruppe zur Verwendung in der Massenproduktion eines Fahrzeugs, wobei die Baugruppe einen Kühler (16), eine Luftleitvorrichtung und ein Scheinwerferhalterungselement umfaßt, wobei die Luffleitvorrichtung mit dem Kühler verbunden ist und eine Ventilatorhalterung zur Befestigung eines Kühlungsventilators (13) aufweist, wobei das Scheinwerferhalterungselement eine innere Wand (201) aufweist, die eine Öffnung (202) bestimmt, und sich davon seitlich erstreckt, um die jeweiligen gegenüberliegenden Halterungen (214,215) für Fahrzeugscheinwerfer zu bilden, wobei die Luftleitvorrichtung in der Öffnung (202) angeordnet und am Scheinwerferhalterungselement befestigt ist, **dadurch gekennzeichnet, daß** die Luftleitvorrichtung durch das Lüftergestell gebildet wird, das ein Gestellteil zur Aufnahme des Kühlers aufweist, wobei dieses Gestellteil einen Behälter für Reinigungsflüssigkeit umfaßt.

10. Baugruppe nach Anspruch 9, bei der das Scheinwerferhalterungselement des weiteren Halterungen für die Reinigungsvorrichtung und die Scheinwerfer aufweist.

11. Baugruppe nach einem der Ansprüche 9 bis 10, bei der das Scheinwerferhalterungselement aus geformtem Kunststoffmaterial hergestellt ist.

12. Baugruppe nach einem der Ansprüche 9 bis 11, bei der das Scheinwerferhalterungselement Befestigungsvorrichtungen zur festen Verbindung der Baugruppe mit einem Fahrzeug umfaßt.

## Revendications

1. Structure moulée (200) en matière plastique destinée à être utilisée dans la production en grande série d'un véhicule, ladite structure comportant une paroi intérieure (201) définissant une ouverture (202), la paroi intérieure ayant un moyen pour la fixation de ladite structure à un ensemble à échangeur de chaleur, ladite structure ayant des extrémités latérales opposées formant des parties de montage respectives (214, 215) pour des projecteurs dudit véhicule, **caractérisée en ce que** l'ensemble à échangeur de chaleur comporte un dispositif à carénage de ventilateur fixé à un radiateur (16) de véhicule, ledit dispositif à carénage de ventilateur présentant des parties de montage pour un ventilateur (13) de refroidissement ; et dans laquelle le dispositif à carénage de ventilateur comporte des réservoirs de liquide.

2. Structure moulée en matière plastique selon la revendication 1, dans laquelle la structure comporte en outre des parties de montage pour un appareil de nettoyage destiné à nettoyer lesdits projecteurs.

3. Structure moulée en matière plastique selon la revendication 2, dans laquelle les parties de montage pour un appareil de nettoyage comprennent des parties de montage pour un lave-projecteur.

4. Procédé pour la formation d'une structure (200) moulée en matière plastique selon la revendication 1, ledit procédé comprenant l'utilisation d'un moule correspondant à ladite structure et l'utilisation d'un processus de moulage pour former ladite structure.

5. Procédé selon la revendication 4, dans lequel le processus de moulage comprend un moulage par soufflage.

6. Procédé selon la revendication 4, dans lequel le processus de moulage comprend un moulage par injection.

7. Procédé selon la revendication 4, dans lequel le processus de moulage par injection comprend un thermoformage.

8. Procédé selon la revendication 4, dans lequel le processus de moulage comprend un moulage par rotation.

9. Ensemble destiné à être utilisé dans la production en grande série d'un véhicule, ledit ensemble comportant un radiateur (16), un dispositif de guidage d'air et un élément de montage de projecteur, ledit dispositif de guidage d'air étant supporté sur ledit radiateur et ayant un support de ventilateur auquel un ventilateur (13) de refroidissement est destiné à être fixé, ledit élément de montage de projecteur ayant une paroi intérieure (201) définissant une ouverture (202) et s'étendant latéralement à partir de celle-ci pour former des parties de montage opposées respectives (214, 215) pour des projecteurs de véhicule, ledit dispositif de guidage d'air étant disposé dans ladite ouverture (202) et fixé à un élément de montage de projecteur, **caractérisé en ce que** ledit dispositif dé guidage d'air est formé par le carénage du ventilateur qui comporte une partie de corps engageant ledit radiateur, ladite partie de corps comportant un réservoir pour un fluide de nettoyage.

10. Ensemble selon la revendication 9, dans lequel l'élément de montage de projecteur comporte en outre des parties de montage pour un appareil de nettoyage et des projecteurs.

11. Ensemble selon la revendication 9 ou 10, dans lequel ledit élément de montage de projecteur est formé d'une matière plastique moulée.

12. Ensemble selon l'une quelconque des revendications 9 à 11, dans lequel l'élément de montage de projecteur comprend des parties de fixation pour fixer l'ensemble à un véhicule.
